(19) **Europäisches Patentamt**
**European Patent Office**
**Office européen des brevets**

(11) **EP 4 760 583 A1**

(12) **EUROPEAN PATENT APPLICATION**

(43) Date of publication:
**17.06.2026 Bulletin 2026/25**

(21) Application number: **24383367.0**

(22) Date of filing: **13.12.2024**

(51) International Patent Classification (IPC):
*G06F 30/23* (2020.01)    *G06F 111/10* (2020.01)

(52) Cooperative Patent Classification (CPC):
**G06F 30/23;** G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
  • Multiverse Computing, S.L.
    20014 Donostia - San Sebastian (ES)
  • IKERLAN S.COOP
    20500 Arrasate (ES)

(72) Inventors:
  • ALI, Mazen
    20014 Donostia - San Sebastian (ES)

  • **CORTINES PEIXOTO NETO, Aser**
    92800 Puteaux (FR)
  • **MORALES GUZMAN, Siddhartha Emmanuel**
    20014 Donostia - San Sebastian (ES)
  • **PALMER, Samuel Douglas**
    Toronto, M5C 2T2 (CA)
  • **MUGEL, Samuel**
    Toronto, M5C 2T2 (CA)
  • **ORUS, Roman**
    20014 Donostia - San Sebastian (ES)
  • **OLAVE IRIZAR, Mireia**
    20500 Arrasate (ES)
  • **USABIAGA CARREA, Hodei**
    20500 Arrasate (ES)

(74) Representative: **Elion IP, S.L.**
    **Paseo Castellana, 150-4 dcha**
    **28046 Madrid (ES)**

(54) **SIMULATION SYSTEM AND METHOD FOR MATERIAL DEFORMATION**

(57) A computer-implemented method for simulating and analyzing material deformations with principles of linear elasticity; the method includes: decomposition of a geometry into multiple simple domains and computing mesh-grid tensor as TN-vectors for all dimensions for specifying the corresponding coordinate with defining mesh-grid function for any given input in mesh-grid tensors; using mesh-grid tensors for each simple domains that defined for all available dimensions; computing the components of the Jacobian and determinant of the Jacobian of the element transformation and mapping the reference element into small element of each simple domain to compute them all at once with using TN-operations; processing stress and strain fields within the material, forces applied to the material and test function equations that defined on the storage medium over local elements for the stiffness and mass matrices through the Jacobian components that computed in a previous step; assembling the stiffness TN-operators and the mass TN-operators for each simple domain; stitching the stiffness TN-operators and the mass TN-operators together for enforcing continuity over interfaces; applying mass TN-operator unit to external force TN-vector.

Figure 3

**Description**

**TECHNICAL FIELD**

The disclosure relates to simulation method and system for analyzing material deformation based on quantum mechanics.

Specifically, but without limitation, the disclosure pertains to a method for tensor network-based material deformation analysis and/or simulation within the framework of linear elasticity which can be performed on at least one computer system that includes at least one computation unit.

**BACKGROUND**

Material simulations are essential computational tools extensively used in both academic research and industrial applications. Many manufacturers heavily rely on such tools to optimize product design and reduce time to market. Classically these simulations are performed by solving partial differential equation models with finite element methods. However, the large number of degrees of freedom in accurate simulations leads to a very high computational cost.

Tensor networks (TNs) were initially developed in quantum mechanics to efficiently describe otherwise intractable quantum systems. TNs are capable of exponential compression for problems that contain certain structures. TN methods have been successfully applied to differential equations in state of the art. Furthermore, these methods may be considered for industrially relevant problems such as material simulations. The industrial application of these methods can significantly improve computational performance.

Patent document EP3084632A1 explains multiscale modeling and simulation software products in a control system for a manufacturing process. It also describes finite element problems to determine an effect of the stimulus on the coarse scale mesh using a numerical technique for dimensional reduction of physical field variable/tensor problems by computing Eigenmodes of a transformed non-dispersive stiffness matrix. However, this system does not apply to quantum systems and does not address reducing computational costs while maintaining high accuracy.

As a result, all the problems listed above require innovation in the relevant field.

**SUMMARY**

An objective of the disclosure, in accordance with some examples, is significantly reducing computational costs while maintaining high accuracy. Thus, the disclosure provides more efficient product development cycles, improved material properties, and a substantial reduction in time to market. The method applies tensor networks (TNs) to simulate material deformations within the framework of continuum mechanics.

Another objective of the disclosure, in accordance with some embodiments, is increasing the computation speed with quantum or quantum-implemented methods and/or systems that storing all components and manipulate in tensor network format with specified assembly process.

Another objective of the disclosure, in accordance with some embodiments, is splitting a grid-sized geometry into multiple pieces as a tensorized format and analyzing them with the TN-operators.

Another objective of the disclosure, in accordance with some embodiments, is computing the contribution of each node type combination to the global operators in a tensorized form using the TN-operators with the values with at least one computer or computing system.

Another objective of the disclosure, in accordance with some embodiments, is providing a simulation system for analyzing material deformation that can run on at least one computer that includes a processor or that can run on a quantum computer/processor or a simulator.

**BRIEF DESCRIPTION OF THE DISCLOSURE**

The disclosure is related to simulation systems and methods for material deformation to fulfil one, some or all aims mentioned above and will be obtained from the following detailed description. The disclosure is also related to: data processing systems with means for carrying out the methods; computer program products comprising instructions which, when the program products are executed by at least one computing unit, cause the at least one computing unit to carry out the methods; and computer-readable data carrier having stored thereon the computer program products, which may be computer-readable non-transitory storage mediums in some examples.

In accordance with embodiments, a computer-implemented method is provided for simulating and analyzing material deformations with principles of linear elasticity using quantum or quantum-implemented methods. In this method many different material deformations can be analyzed. For example: metals like steel, copper, aluminum; curable polymers like epoxy, polycarbonate; composite materials, ceramics, concrete etc. The method performs on at least one computing system that includes at least one processor, and at least one storage unit or medium containing parameters related to the material properties of a predetermined material with grid size geometry, and predefined external forces in a TN-Vector format; and the method includes a step of splitting the material properties with the grid sized geometry into multiple pieces.

The method includes decomposition of the geometry into multiple simple domains and computing one or more mesh-grid tensors as TN-vectors for all dimensions for specifying a corresponding coordinate with defining mesh-grid function for any given input in the one or more mesh-grid tensors; using the one or more mesh-grid tensors for each simple domains that are defined for all available dimensions to compute components of a Jacobian and determinant of the Jacobian of an element transformation; and mapping a reference element into a small element of each simple domain to compute the components all at once using TN-operations; processing stress and strain fields of a predetermined material model, forces applied to the predetermined material model and predefined test function equations (i.e., test function equations that are defined on the at least one storage unit or medium) over local elements for stiffness and mass matrices through the Jacobian components of the step of computing the components; assembling the stiffness and mass operators for each simple domain; stitching stiffness and mass operators together for enforcing continuity over interfaces; and applying a mass TN-operator to the external force TN-vector.

In some embodiments of the disclosure, the method includes computing a contribution of each node type combination to the global operators in a tensorized form using TN-operators with the values of the step of assembling the stiffness and mass operators for each simple domain; which are representing each material piece.

In some embodiments of the disclosure, the method includes providing or defining boundary conditions of the material for the simulation. These boundary conditions can be a definition for which side of the material is "fixed" (clamped).

In some embodiments of the disclosure, the method includes applying the TN-shift operators to the contributions above to shift the indices to the correct position in the global TN-operator.

In some embodiments of the disclosure, the method includes applying the boundary conditions through a mask TN-operator.

In some embodiments of the disclosure, the method includes stitching stiffness and mass operators together for enforcing continuity over interfaces by applying Kronecker products and TN-concatenation operators.

In some embodiments of the disclosure, the method includes a domain stitching step for joining or which allows to join different quadrilaterals/hexahedrons (SDs), allowing the geometry to be more complex and having different constants. Many simulations in industry are for testing joints of two different materials.

In some embodiments of the disclosure, the method includes using an implementation preconditioner for maintaining stability for ultra-fine grids, which allows to increase the number of points in the discretization, solve the same system and maintain the desired precision, while small numerical errors can be amplified due to the properties of the system.

In some embodiments of the disclosure, the method includes implementing material and geometric non-linearities for providing full non-linear displacement-strain relation, when the system is big enough and second order deformations are no longer negligible. This implementation is deployable within tensor network methods since it only involves Hadamard product of tensors. In some examples, a system is big enough when forces are so large that the associated deformations are big enough such that they are not well represented by linear (i.e., first order) approximations. By way of example, in a linear stretch of a uniaxial bar, the second order relative stretch is very relevant for relative stretches approximately of at least 10% the size of the bar.

In some embodiments of the disclosure, the method includes conducting dynamic computation that involves (e.g., time-dependent loading) discretizing the time and solving the same linear system for each time step; therefore, the method can highly reduce this computational time. This computation only involves creating different stiffness matrices and solving them at different discretization steps, then only classical implementations could be needed for this part.

In some embodiments of the disclosure, the method includes solving the assembled system with DMRG (i.e., density matrix renormalization group) or AMEn (i.e., alternating minimal energy) TN-solvers.

In some embodiments of the disclosure, the method includes computation made by splitting simple domain into quadrilaterals or hexahedrons according to the dimension (2D or 3D) of the geometry.

In some embodiments of the disclosure, alternative materials can be analyzed and material properties may vary with the direction of measurement or depending on where the material is measured, e.g., wood, carbon fiber, non-homogeneous materials.

The protection scope of the disclosure is specified in the claims and cannot be limited to the description made for illustrative purposes in this brief and detailed description. It is clear that a person skilled in the art can present similar embodiments in the light of the above and following descriptions without departing from the main theme of the disclosure.

**BRIEF DESCRIPTION OF DRAWINGS**

Figure 1 represents some embodiments of the disclosure.

Figure 2 represents some embodiments of the disclosure.

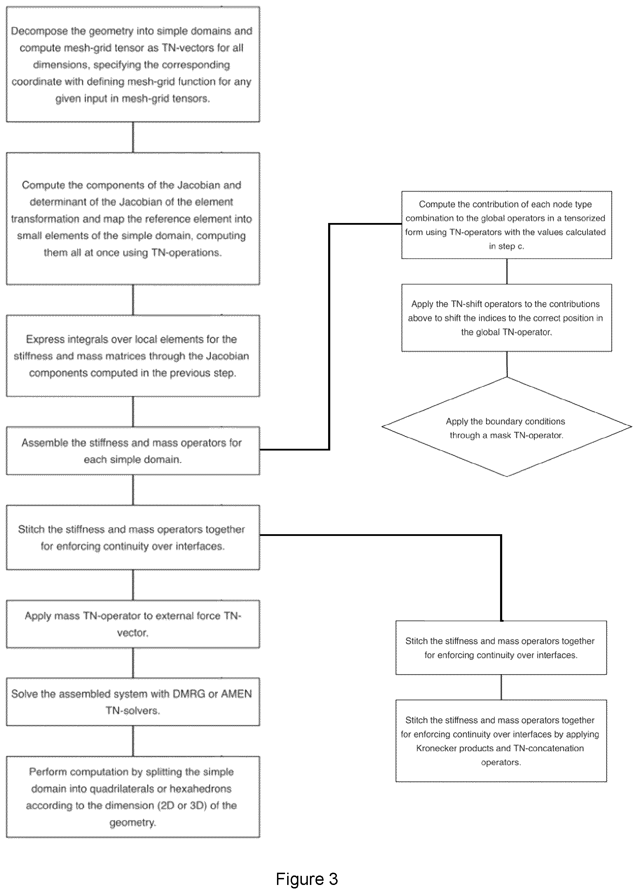

Figure 3 illustrates in a flowchart that shows the steps of a method in accordance with some embodiments of the disclosure.

Figure 4A shows an example QR-decomposition of matrix A.

Figure 4B shows an example tensor train decomposition of a vector.

Figure 4C shows an example tensor train decomposition of an operator.

Figure 5 shows an example quadrilateral discretization with tensor networks.

Figure 6A-6G shows the results of a method in accordance with some embodiments of the disclosure and includes comparisons with another simulation method known in the art.

**DESCRIPTION OF THE REFERENCE NUMBERS ILLUSTRATED IN THE FIGURES**

10. Computing unit

100.Analyzing module

11. Storage medium

20. Data input module

21. Data initialization module

30. Geometry decomposition module

40. Mesh-grid computation module

50. Transformation/Mapping module

51. Mathematical computation module

60. TN-operator unit

61. Global TN-operator

62. TN-Shift operator

63. Mask TN-operator

64. TN-concatenation operator

65. Mass TN-operator

66. Stiffness TN-operator

S. System

## DETAILED DESCRIPTION

In this detailed description, a simulation system and a method for material deformation is described by means of examples only for clarifying the subject matter without any limitation of the scope of the disclosure.

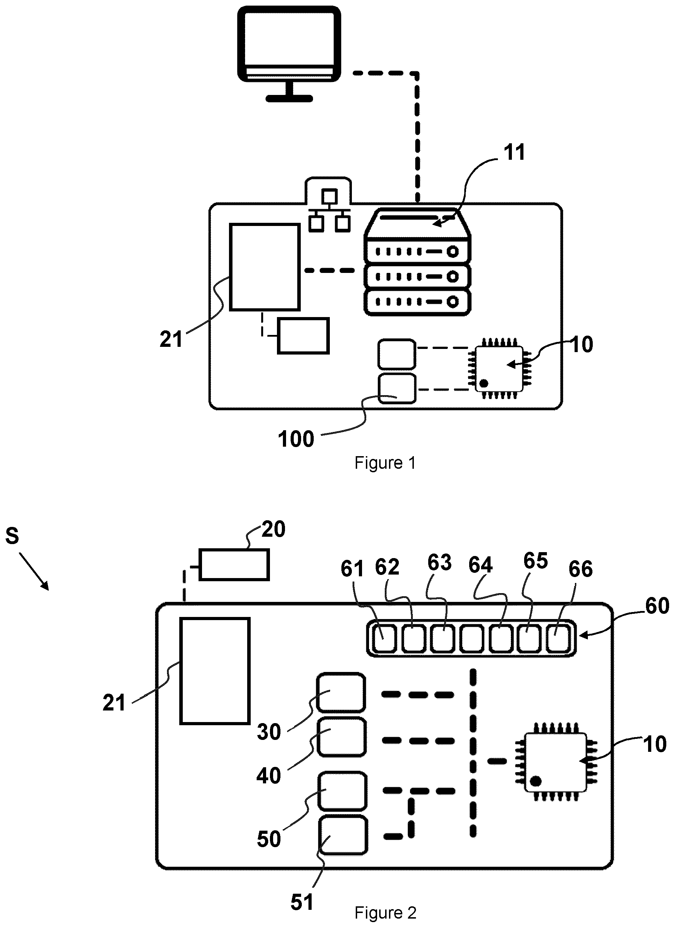

A computer-implemented method for simulating and analyzing material deformations with principles of linear elasticity uses at least one computing system (S), such as, e.g., the system shown in Figure 1 and/or Figure 2. The at least one computing system (S) includes at least one computing unit (10) and at least one storage medium (11). The at least one storage medium (11) comprises: parameters that are related to material properties of a predetermined material where the material properties have a grid size geometry; and predefined external forces in TN-Vector format. The parameters and/or the predefined external forces may be already stored in the at least one storage medium (11), received from a remote device or system (such as, e.g., at least one sensor, at least one computing device, etc.) through a communications channel, be manually input through user input means, etc.

The computer-implemented method may provide, upon simulating and/or analyzing material deformations, outputs such as data representative of deformations of the material for a given set of input conditions (e.g., forces, material properties, etc.). In some cases, said outputs or data may be provided for use by a computing device or by a user, for example, the outputs or data may be displayed in several ways. By way of example, the method could connect to a computer display and provide visual graphics of the material with the corresponding deformations. By way of example, the method may output a mathematical amount of deformations, which could be used by a technician for further computational analysis if required.

The computer-implemented method includes a step of splitting the grid sized geometry into multiple pieces and for analyzing material deformations; decomposing the geometry into multiple simple domains and computing a mesh-grid tensor as TN-vectors for all dimensions for specifying the corresponding coordinate with defining mesh-grid function for any given input in mesh-grid tensors; using mesh-grid tensors for each simple domains that defined for all available dimensions; computing the components of the Jacobian and determinant of the Jacobian of the element transformation and mapping the reference element into small element of each simple domain to compute them all at once with using TN-operations; processing stress and strain fields within the material, forces applied to the material and test function equations that are defined on the at least one storage medium (11) over local elements for the stiffness and mass matrices through the Jacobian components that computed in a previous step; assembling stiffness TN-operators (66) and mass TN-operators (65) for each simple domain; stitching the stiffness TN-operators (66) and the mass TN-operators (65) together for enforcing continuity over interfaces; applying a mass TN-operator unit (60) to external force TN-vector.

The method proceeds, in some embodiments, in two stages with the at least one computing unit (10) as assembling a virtual system using tensor network operators and representing a discrete model, and simulating the results that are related to an applied force on the material.

In the computer-implemented method, input definitions are grid size, geometry, material parameters (type, stiffness etc.), boundary conditions (clamped sides that are used when the force is applied on the material in the simulations), and external forces definition variables for every simulation. These inputs can be entered into the at least one computing system (S). for example, as one or more variables for each simulation or analysis. In some embodiments of the disclosure, material parameters are used for providing one or more Cauchy stress tensors, which describes the materials infinitesimal response to stresses.

The computer-implemented method defines an assembly in a tensorized format. With this step, the assembly is created by decomposition of the geometry into simple domains and computing mesh-grid tensor as TN-vectors for all dimensions for specifying the corresponding coordinate with defining mesh-grid function for any given input (e.g., one or more inputs) in mesh-grid tensors. Computational domains extended from one dimension to two and three dimensions (2D or 3D). The computational domain is split into quadrilaterals or hexahedrons for defining the dimensions (quadrilaterals for 2D, hexahedrons for 3D). On each piece, the method assembles a local system directly represented with a TN operator with the TN-operator unit (60). The local TN operators (which are the stiffness TN-operators (66) and/or the mass TN-operators (65)) are then combined into a global TN-operator (61), which represent discrete differential equations on this domain, including the boundary conditions which is a fixation status of the material. Precision may be obtained through an exponential discretization of the domain and linear approximation functions that may be enough for exponential compression.

Unlike finite elements, simple domains are larger subdomains that simplify complex geometries. Decomposition to the simple domain process allows for flexible meshing and handling of intricate shapes, while finite element analysis is applied within each single domain. All elements in the analysis of each simple domain (SD) are quadrilaterals (2D) or hexahedrons (3D) with piecewise bilinear or trilinear basis functions.

A data input module (20) and a data initializing module (21) evaluate and/or convert the external forces as TN-Vector format. Such evaluation and/or conversion is made with the support of the at least one computing unit (10) and, in some embodiments, the evaluation and/or conversion is based on a TN-cross approximation method.

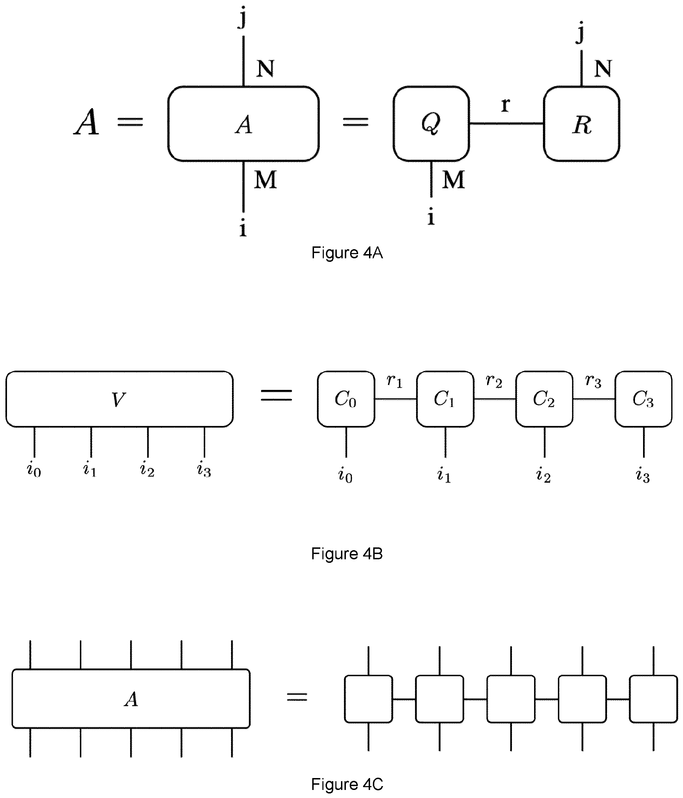

Figures 4A, 4B and 4C show an example decomposition of a matrix and a tensor train of a vector with an operator.

$$A = QR, \quad A \in \mathbb{R}^{M \times N}, \ Q \in \mathbb{R}^{M \times r}, \ R \in \mathbb{R}^{r \times N}.$$

Tensor trains (TTs) can also be applied to matrices and vectors, a process commonly referred to as the quantics tensor train (QTT).

A mesh-grid computation module (30) computes one or more mesh-grid tensors as TN-vectors that specifies the corresponding coordinate for any above-mentioned inputs for all dimensions. For example, if the given coordinates are x, y and z, the mesh-grid tensors return X (x, y, z) = x, Y (x, y, z) = y and Z (x, y, z) = z.

In some embodiments, the above mentioned construction of X, Y and Z can be performed exactly with small TN-ranks. Thus, the method provides small storage and short compression time (Logarithmic in grid size).

In some embodiments, the method includes a computation made for a same time for each material piece, which are represented as simple domains with the mesh-grid tensors (X, Y, Z) with the definition of Jacobian using tensor network operations. Jacobian components computation, element transformation managed with the mapping the reference element. In some embodiments, the mentioned reference element (mapping) is [-1, 1]$^2$ in the 2D and [-1, 1]$^3$ in the 3D for any element of the simple domain. These components depend linearly on the mesh-grid functions X, Y and Z. This, in turn, provides computation as same time for all material pieces that have been defined in different simple domains.

According to some alternative embodiments of the disclosure, a 3D implementation is extension of the 2D implementation, here the mesh-grid tensors are built in the same way maintaining a very low rank. The Jacobian components are based on those mesh-grid tensors; therefore, their construction is straightforward. All the following steps are the same but just with an extra dimension to be encoded in a tensor format.

In some embodiments, the computer-implemented method includes the assembly of a discrete model system, which may be performed in a tensorized format, wherein a computational domain is split into pieces. Local tensor network (TN) operators are assembled on each piece directly in a TN format, and the local TN operators are combined into a global TN operator representing the discrete model system including boundary conditions on the computational domain. The assembled system is solved using TN solvers, with regular recompression of solution TNs to maintain computational efficiency by controlling TN ranks and complexity.

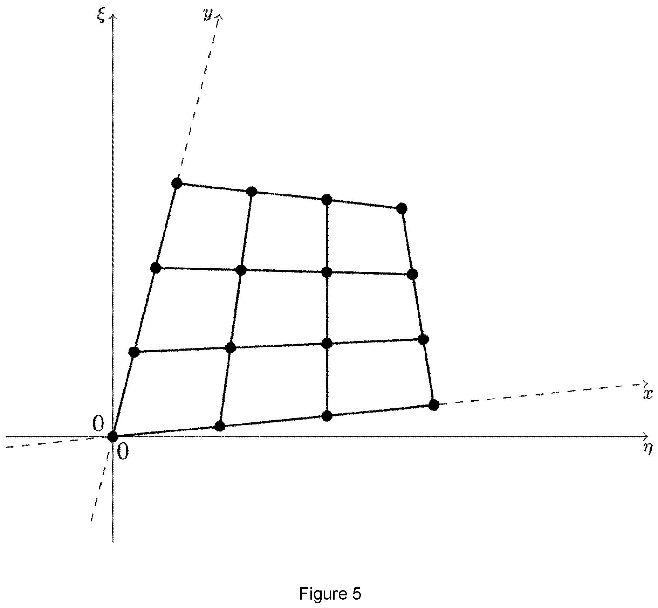

Figure 5 shows an example quadrilateral discretization in powers with the tensor networks. According to the example, it is shown 4$^2$ discretization, i.e., this example shows 16 grid points including boundary points, 32 degrees of freedom (16 for each vector field component) and 9 elements.

In some embodiments, the computer-implemented method includes an assembly process that comprises a tensorized definition for all input and element. Each component of the vector fields represented as a tensor train (TT) like figure 4B with, e.g., the following equation.

$$a(u, \ v) \ := \int_\Omega \sigma\big(u(x)\big) : \varepsilon\big(v(x)\big) \, diffx = L(v) := \int_\Omega f(x) \cdot v(x) \, diffx$$

In some embodiments, a stiffness matrix A and force vector f represented as TT-operator, like in figure 4C, for a configuration for the at least one computing unit (10).

For calculating a Jacobian, the computer-implemented method may include a similar calculation. In this sense, the inverse ($detJ$)$^{\{-1\}}$ with TN-cross approximation may be conducted.

A difference between the disclosed computer-implemented method (and system) and known methods is that a tensorized assembly lies within the treatment of the Jacobians of the element transformations. According to the disclosure, all components are stored and manipulated in a TN format, which requires a specialized assembly process.

$$J_{\{(i,j)\}}(\xi) = \quad J_{\{(0,0)\}}(\xi) + i\left(J_{\{(1,0)\}}(\xi) - J_{\{(0,0)\}}(\xi)\right) \quad + j\left(J_{\{(0,1)\}}(\xi) - J_{\{(0,0)\}}(\xi)\right)$$

A similar expression for the determinant may be provided. Construction of X and Y (for 2D) may also be conducted such that

$$X(i,j) = i \quad \text{and} \quad Y(i,j) = j$$

defines a tensorized mesh-grid function. The construction of $X$ and $Y$ is straightforward and has a tensor rank of at most second due to above expression since each component of the Jacobian is an affine-linear function in $X$ and $Y$ and construct a TT for each Jacobian component with the same ranks as $X$ and $Y$. Thus, it provides

$$J(\xi) \;=\; \begin{pmatrix} J_{\{(1,1)\}}(\xi) & J_{\{(2,2)\}}(\xi) \\ J_{\{(2,1)\}}(\xi) & J_{\{(2,2)\}}(\xi) \end{pmatrix}$$

where each component $J_{kl}(\xi)$ is a TT representing the values of that component of the Jacobian, evaluated at $\xi \in$ for all elements also for the det $J$.

All the above computations for $J$ and det $J$ are preferably numerically exact and represented with low-rank TTs. However, the inverse above Jacobians equation must be expressed explicitly through the components of $J$ to apply TT operations (TT-cross interpolation). The inverse of $J$ can be expressed through the adjugate of $J$ and the inverse determinant $(detJ)^{-1}$. This means computing the TT representation $(detJ)^{-1}$ of the component-wise inverse of det $J$. In one embodiment of the invention TT-cross routines used for doing it.

The computer-implemented method and the system (S) simulate stress and strain fields within the material which are defined as simple domains, forces applied to the material and test function equations that defined on the at least one storage medium (11) over local elements for the stiffness and mass matrices through the Jacobian components. This calculation made by the at least one computing unit (10).

0According to the 2D analysis, each element/material has four corners (as shown, for example, in Figure 5), and to each of those corners, two basis functions can be associated (or three in 3D) with one basis function for each coordinate direction of the vector fields as. Thus, provides eight possible basis functions per element/material in total.

The computer-implemented method and the system (S) which runs said method include computing or at least one mathematical computation module (51) for processing stress and strain fields within the material, and computing the stiffness operator for pairs of basis functions $a(\varphi_j, \varphi_i)$. Thus, the computation gives a total of 64 possible pairs that expressed each of these in terms of the tensorized Jacobian components involved.

In some embodiments, each of the terms added to the global stiffness operator $A$.

Forces applied to the material and test function equations with the parameters provided from a TN-operator unit (60) provide representation of force vector values at all grid points.

The system (S) illustrated, e.g., in Figures 1 and/or 2, is for simulating and analyzing material deformations with principles of linear elasticity, such as according to the aforesaid computer-implemented method.

The system (S) includes at least one data input module (20) and data initialization module (21) that create tensorized definitions for parameters that are related to the material properties with grid size geometry and predefined external forces in TN-Vector format; at least one geometry decomposition module (30) that decomposes the geometry into simple domain and splits the grid sized geometry into multiple pieces; at least one mesh-grid computation module (40) that specifies the corresponding coordinates which can be received from data initialization module (21); at least one transformation/mapping module (50) that can work together with the at least one computing unit (10) and that computes the component element transformation and mapping the reference element for the dimensions and at least one TN-operator unit (60) that computes mesh-grid functions into the at least one computing unit (10); at least one mathematical computation module (51) that processes stress and strain fields within the material, the forces applied to the material and test function equations using with the parameters provided by the at least one TN-operator unit (60); and also includes

   ○ At least one global TN-operator (61) that computes the contribution of each note types as a tensorized from with the values received from at least one TN-operator unit (60) and the at least one mathematical computation module (51);
   ○ At least one TN-shift operator (62) that shifts the indices to the correct position in the at least one global TN operator (61);
   ○ At least one mask TN-operator (63) that applies boundary conditions, which are a definition of the material's fixation status;
   ○ At least one TN-concatenation operator (64) that stitches stiffness and mass operators together;
   ○ At least one mass TN-operator that simulates with the external force TN-vector received from data initialization module (21).

The system (S) also includes at least one analyzing module (100), that is pre-defined on the at least one computing unit (10), and simulates the external tensorized forces effects to the assembled tensorized virtual system, which includes tensorized material that is stored on the at least one storage medium (11).

In some embodiments, a mass matrix can be assembled analogously as a mass TN-operator (65) to stiffness TN-operator (66) with the TN-concatenation operator (64) of the system (S).

In some embodiments, the system (S) includes at least one global TN-operator (61) that computes the contribution of each note types as a tensorized from with the values received from the at least one TN-operator unit (60) and the at least one mathematical computation module (51).

In some embodiments, the system (S) includes at least one TN-shift operator (62) that shifts a position of indices in the at least one global TN operator (61). Particularly, the at least one TN-shift operator (62) shifts the indices to the correct position in the at least one global TN operator (61).

In some embodiments, the system (S) includes at least one mask TN-operator (63) that applies boundary conditions that are defined as TN format at the data initializing module (21) for simulation and analysis.

In some embodiments, the system (S) includes at least one mass TN-operator that simulates with the external force TN-vector that received from the data initialization module (21) for simulation.

In some embodiments, the computer-implemented method and the system (S) includes or performs a compression step which provides exponential speedups for the simulations.

In the system (S), modules and operators as described above are configured to conduct the functions described.

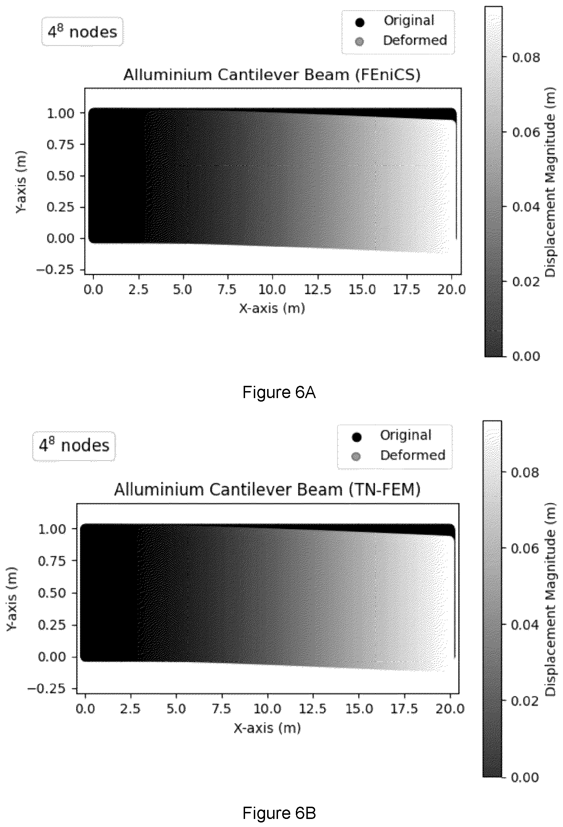

Figures 6A and 6B shows a test example for a material which is a 2D cantilever beam made of aluminum with 20m length, 1m width.

The simulation conditions are: Young modulus of E=68GPa. Poisson's ratio of v=0.33, density $\rho = 2700 kgm^{-3}$, fixed on one side with $4^8$ grid points.

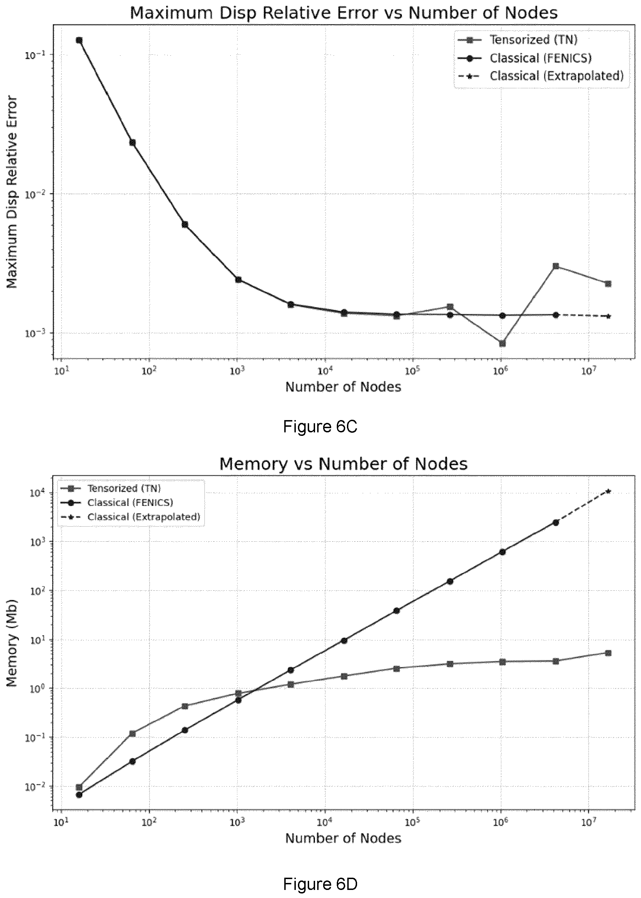

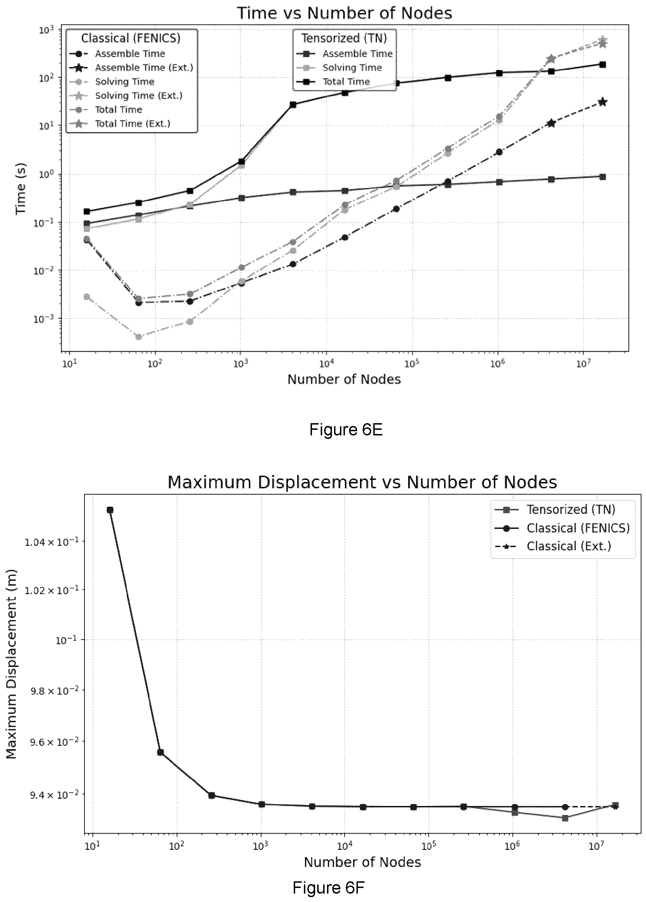

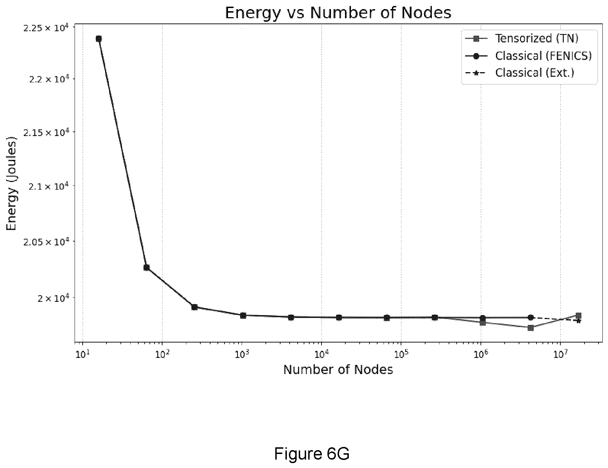

Comparison made between FEniCS (Open source calculation method that can run on a computing system) and a computer-implemented method according to some embodiments of the disclosure: Figure 6C shows relative errors for the maximum displacement between both methods; Figure 6D shows memory needs to store the stiffness matrix, force vector and the displacement vector with the logarithmic scale. This result shows exponential compression of the data with better results; Figure 6E shows solving time and total time; and Figure 6F and Figure 6G show displacement and energy comparisons.

The method and system of the present disclosure can be applicable to any computation system with configurations as set out above. The at least one computing unit (10) executes the tensor network-based material deformation analysis/simulation with the method and analyzes material deformation based on quantum mechanics within the framework of linear elasticity and performs material deformation analysis/simulation and creates results to the user(s).

## Claims

1. A computer-implemented method for simulating and analyzing material deformations with principles of linear elasticity; the method comprises:

   splitting material properties of a predetermined material into multiple pieces, wherein the material properties have a grid sized geometry,

   decomposition of the geometry into multiple simple domains and computing one or more mesh-grid tensors as TN-vectors for all dimensions for specifying a corresponding coordinate with a defining mesh-grid function for any given input in the one or more mesh-grid tensors;

   using the one or more mesh-grid tensors for each simple domains that are defined for all available dimensions to compute components of a Jacobian and a determinant of the Jacobian of an element transformation, and mapping a reference element into a small element of each simple domain to compute the components all at once using TN-operations;

   processing stress and strain fields of the predetermined material, predefined external forces applied to the predetermined material and predefined test function equations over local elements for the stiffness and mass matrices through the Jacobian components of the step of computing the components, the predefined external forces being defined in TN vector format;

   assembling stiffness TN-operators (66) and mass TN-operators (65) for each simple domain;

   stitching the stiffness TN-operators (66) and the mass TN-operators (65) together for enforcing continuity over interfaces,

   applying a mass TN-operator to a predefined external force TN-vector related to the predetermined material.

2. Computer-implemented method according to claim 1, wherein assembling the stiffness and mass operators for each simple domain; which are representing each material pieces; computing the contribution of each node type combination to the global operators in a tensorized form using step d with the TN-operators with the values that calculated in the step c.

3. Computer-implemented method according to any one of the preceding claims, wherein applying the TN-shift operators to the contributions above to shift the indices to the correct position in the global TN-operator.

4. Computer-implemented method according to any one of the preceding claims, wherein applying boundary conditions to the material defined as a grid sized geometry through a mask TN-operator.

5. Computer-implemented method according to any one of the preceding claims, wherein the step of stitching stiffness and mass operators together for enforcing continuity over interfaces comprises applying Kronecker products and TN-concatenation operators.

6. Computer-implemented method according to any one of the preceding claims, further comprising solving an assembled system with DMRG orAMEn TN-solvers.

7. Computer-implemented method according to any one of the preceding claims, further comprising computing by splitting simple domain into quadrilaterals or hexahedrons according to a dimension of the geometry.

8. Computer-implemented method according to any one of the preceding claims, wherein the material properties of the predetermined material with the grid size geometry and the predefined external forces in TN format are stored in at least one storage medium (11).

9. A data processing system comprising means for carrying out a method according to any one of the preceding claims.

10. A computer program product comprising instructions which, when the program is executed by at least one computing unit, cause the at least one computing unit to carry out a method according to any one of claims 1-8.

11. A computer-readable data carrier having stored thereon a computer program product according to claim 10.

12. A system (S) for simulating and analyzing material deformations with principles of linear elasticity according to the method according to any one of the claims 1-8, the system (S) **characterized by** including

   • At least one data input module (20) and data initialization module (21) configured to create tensorized definitions for parameters that related to the material properties with grid size geometry, and predefined external forces in TN-Vector format;
   • At least one geometry decomposition module (30) configured to decompose the geometry into simple domain and split the grid sized geometry into multiple pieces;
   • At least one mesh-grid computation module (40) configured to specify corresponding coordinates receivable from the data initialization module (21);
   • At least one transformation/mapping module (50) configured to compute a component element transformation and map a reference element for the dimensions; at least one TN-operator unit (60) configured to compute mesh-grid functions into a computing unit (10) of the system (S);
   • At least one mathematical computation module (51) configured to process stress and strain fields within the material, forces applied to the material and test function equations using parameters provided by the least one TN-operator unit (60);

      ◦ At least one global TN-operator (61) configured to compute a contribution of each note types as a tensorized form with values receivable from the at least one TN-operator unit (60) and the at least one mathematical computation module (51);
      ◦ At least one TN-shift operator (62) configured to shift indices to a correct position in the at least one global TN-operator (61);
      ◦ At least one mask TN-operator (63) configured to apply boundary conditions, which are a definition of the material's fixation status;
      ◦ At least one TN-concatenation operator (64) configured to stitch stiffness and mass operators together;
      ◦ At least one mass TN-operator configured to simulate an external force TN-vector receivable from the data initialization module (21);

   • At least one analyzing module (100) configured to simulate external tensorized forces effects to the assembled tensorized virtual system, which includes a tensorized material stored on at least one storage medium (11) of the system (S).

13. The system (S) according to claim 12, wherein the at least one mesh-grid computation module (40) is further configured to create mesh grid tensors with TN-ranks for providing small storage and short compression time, the TN-ranks preferably being small TN-ranks.

14. The system (S) according to any one of claims 12-13, further including at least one classical computer that includes a processor configured to initialize the data and at least one quantum device communicating with the at least one classical computer and including at least one quantum processor as a computing unit (10).

Figure 1

Figure 2

Decompose the geometry into simple domains and compute mesh-grid tensor as TN-vectors for all dimensions, specifying the corresponding coordinate with defining mesh-grid function for any given input in mesh-grid tensors.

Compute the components of the Jacobian and determinant of the Jacobian of the element transformation and map the reference element into small elements of the simple domain, computing them all at once using TN-operations.

Compute the contribution of each node type combination to the global operators in a tensorized form using TN-operators with the values calculated in step c.

Express integrals over local elements for the stiffness and mass matrices through the Jacobian components computed in the previous step.

Apply the TN-shift operators to the contributions above to shift the indices to the correct position in the global TN-operator.

Assemble the stiffness and mass operators for each simple domain.

Apply the boundary conditions through a mask TN-operator.

Stitch the stiffness and mass operators together for enforcing continuity over interfaces.

Apply mass TN-operator to external force TN-vector.

Stitch the stiffness and mass operators together for enforcing continuity over interfaces.

Solve the assembled system with DMRG or AMEN TN-solvers.

Stitch the stiffness and mass operators together for enforcing continuity over interfaces by applying Kronecker products and TN-concatenation operators.

Perform computation by splitting the simple domain into quadrilaterals or hexahedrons according to the dimension (2D or 3D) of the geometry.

Figure 3

Figure 4A

Figure 4B

Figure 4C

Figure 5

Figure 6A

Figure 6B

Figure 6C

Figure 6D

Figure 6E

Figure 6F

Figure 6G

# EUROPEAN SEARCH REPORT

Europäisches
Patentamt

European
Patent Office

Office européen
des brevets

| | Application Number |
|---|---|
| | EP 24 38 3367 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EGOR KORNEV ET AL: "Numerical solution of the incompressible Navier-Stokes equations for chemical mixers via quantum-inspired Tensor Train Finite Element Method", ARXIV.ORG, CORNELL UNIVERSITY LIBRARY, 201 OLIN LIBRARY CORNELL UNIVERSITY ITHACA, NY 14853, 18 May 2023 (2023-05-18), XP091511360, * abstract * * figures 1, 4, 5, 7 * * page 3, section B * * page 3, second column * * page 3, equation 3 * * page 4, section C * * page 4 equations 6-8 * * page 5, section D * * page 6 last paragraph * * page 6, left column * * page 7, last paragraph * * page 8 section VI * * the whole document * * page 8, first paragraph * ----- | 1-14 | INV. G06F30/23 ADD. G06F111/10 |
| A | Anonymous: "Linear elasticity - Wikipedia", Wikipedia, 29 September 2024 (2024-09-29), XP093275631, Retrieved from the Internet: URL:https://en.wikipedia.org/w/index.php?title=Linear_elasticity&oldid=1248468311 [retrieved on 2025-05-08] * page 1 * * the whole document * ----- -/-- | 1-14 | TECHNICAL FIELDS SEARCHED (IPC) G06F |

The present search report has been drawn up for all claims

| Place of search | Date of completion of the search | Examiner |
|---|---|---|
| Munich | 9 May 2025 | Joris, Pierre |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KORNEV EGOR ET AL: "TetraFEM: Numerical Solution of Partial Differential Equations Using Tensor Train Finite Element Method", MATHEMATICS, vol. 12, no. 20, 18 October 2024 (2024-10-18), page 3277, XP093275815, ISSN: 2227-7390, DOI: 10.3390/math12203277 Retrieved from the Internet: URL:https://www.mdpi.com/2227-7390/12/20/3 277> [retrieved on 2025-05-09] * abstract * * figures 1-3 * * sections 3-3.5 * * the whole document *<br>----- | 1-14 | |
| A | MONICA MONTARDINI ET AL: "A low-rank isogeometric solver based on Tucker tensors", ARXIV.ORG, CORNELL UNIVERSITY LIBRARY, 201 OLIN LIBRARY CORNELL UNIVERSITY ITHACA, NY 14853, 28 September 2023 (2023-09-28), XP091624703, * abstract * * sections 3, 4.2, 5.3, 6 * * the whole document *<br>----- | 1-14 | TECHNICAL FIELDS SEARCHED (IPC) |

The present search report has been drawn up for all claims

| Place of search | Date of completion of the search | Examiner |
|---|---|---|
| Munich | 9 May 2025 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3084632 A1